# FASCICULE DE BREVET EUROPEEN

(11) **EP 0 927 928 B1**
(45) Date de publication et mention de la délivrance du brevet: **16.05.2001**
(21) Numéro de dépôt: 98470032.8
(22) Date de dépôt: 16.12.1998
(51) Int. Cl.: G06F 7/72

(54) **Procédé de production amélioré d'un paramètre JO associé à la mise en oeuvre d'opérations modulaires selon la méthode de Montgomery**
Verbessertes Verfahren zum Erzeugen eines Parameters J0 bezüglich der Verwendung von modularen Operationen nach der Montgomery-Methode
Improved method of producing a parameter J0 associated with the implementation of modular operations according to the Montgomery method

(30) Priorité: 31.12.1997 FR 9716863
(43) Date de publication de la demande: 07.07.1999
(73) Titulaire: STMicroelectronics S.A., 94250 Gentilly (FR)
(72) Inventeur: Monier, Guy, Cabinet Ballot Schmit, 57000 Metz (FR)
(74) Mandataire: Ballot, Paul Denis Jacques

(56) Documents cités:
- EP-A- 0 778 518

## Description

L'invention concerne un procédé de production d'un paramètre de calcul intervenant dans la mise en oeuvre d'opérations modulaires selon la méthode de Montgomery.

Les opérations modulaires selon la méthode de Montgomery permettent d'effectuer des calculs modulaires dans un corps fini de Galois GF(2ⁿ) à 2ⁿ éléments. sans effectuer de division. Ces opérations ont une application en cryptographie, pour l'authentification de messages, l'identification d'un utilisateur et l'échange de clés. De tels exemples d'applications sont décrits, par exemple, dans la demande de brevet français publiée sous le numéro FR-A-2 679 054.

On peut trouver dans le commerce des circuits intégrés dédiés à de telles applications, par exemple le produit ST16CF54 de la société SGS-THOMSON Microelectronics. Pour réaliser des calculs modulaires, on utilise un coprocesseur arithmétique dédié, décrit dans la demande de brevet européen EP-A-0 601 907.

Dans la mise en oeuvre des opérations modulaires par le coprocesseur dédié. il est nécessaire de produire un paramètre binaire J0, codé sur un nombre entier Bt de bits, et tel que [(J0 + N0) + 1] mod 2^{Bt} = 0, avec N0 un nombre entier impair codé sur Bt bits et mod représentant le modulo.

L'inventeur a déjà proposé des procédés permettant de produire ledit paramètre J0 en utilisant un circuit dédié, ce qui permet de réaliser rapidement, dans un circuit intégré, le calcul de ce paramètre. Ces procédés sont décrits dans la demande de brevet européen EP-A-0 778 518 publiée le 11 Juin 1996.

Un facteur important dans la réalisation d'opérations modulaires est le temps de calcul nécessaire pour produire le résultat recherché. L'inventeur a cherché à améliorer les procédés antérieurs et la présente demande propose un nouveau procédé de calcul, permettant de réaliser plus rapidement le calcul du paramètre J0.

Ainsi l'invention propose un procédé de production dans un circuit intégré d'un paramètre J0 associé à la mise en oeuvre d'opérations modulaires selon la méthode de Montgomery, avec J0 codé sur Q ∗ L bits tels que J0 = J0_{L-1} ... J0₀ , avec Q et L des nombres entier. Le procédé comprend les étapes suivantes :
**Etape 1** : chargement d'une donnée binaire N0, codée sur Q ∗ L bits, le bit de poids faible de N0 étant égal à 1, dans un premier registre, chargement de Q ∗ L zéros dans des deuxième et troisième registre et de L zéros dans un quatrième registre:
**Etape 2** : réalisation d'une boucle de Q itérations comprenant les étapes suivantes, indicée par j, avec j variant de 0 à Q - 1 :
   **Etape 2.1 :** réalisation d'une boucle de L itérations, indicée par i avec i variant de 0 à L - 1. comprenant les étapes suivantes :
      - décalage du contenu du quatrième registre de une unité vers la droite, cette opération correspondant à une division par deux du contenu de ce registre, en oubliant le reste.
      - test du bit issu de ce décalage dans un circuit de test :
         Si le bit contrôlé est à 1 : décalage à droite du contenu du troisième registre d'une unité vers la droite et chargement d'un 0 sur le bit de poids fort de ce registre et dans un cinquième registre; addition bit à bit du contenu du quatrième registre avec un zéro dans un premier additionneur, une sortie de ce premier additionneur étant reliée à l'entrée du quatrième registre, et test du deuxième bit de poids faible en sortie du premier additionneur;
         Sinon : décalage à droite du contenu du troisième registre de une unité vers la droite; chargement d'un 1 sur le bit de poids fort du troisième registre et dans le cinquième registre; addition bit à bit du contenu du quatrième registre et des L derniers bits du premier registre, dans le premier additionneur, la sortie de ce premier additionneur étant reliée à l'entrée du quatrième registre, le premier registre formant un registre de L bits dont l'entrée et la sortie sont reliées, et test du deuxième bit de poids faible en sortie du premier additionneur;
   **Etape 2.2** :
      décalage du contenu de l'ensemble du premier registre et réalisation, dans un circuit de multiplication, de la multiplication du contenu du premier registre par le contenu du cinquième registre, celui-ci ayant été complété de zéros logiques si sa taille est supérieure à L; décalage du contenu du deuxième registre et addition de ce contenu avec le résultat de la multiplication, codé sur Q ∗ L + L bits. dans un deuxième additionneur; stockage, dans le deuxième registre, des Q ∗ L bits de poids fort de la donnée binaire produite par le deuxième additionneur, et stockage des L bits de poids les plus faibles de ces Q ∗ L bits dans le quatrième registre.
      Selon un mode de réalisation l'étape 2.2 est la suivante :
         lors des Q - 1 premières itérations :
         décalage du contenu de l'ensemble du premier registre et réalisation, dans un circuit de multiplication, de la multiplication du contenu du premier registre par le contenu du cinquième registre, celui-ci ayant été complété de zéros logiques si sa taille est supérieure à L; décalage du contenu du deuxième registre et addition de ce contenu avec le résultat de la multiplication, codé sur Q ∗ L + L bits, dans un deuxième additionneur;
         stockage, dans le deuxième registre, des Q ∗ L bits de poids fort de la donnée binaire produite par le deuxième additionneur, et stockage des L bits de poids les plus faibles de ces Q ∗ L bits dans le quatrième registre.
      Selon un mode de réalisation, l'étape 2.2 est la suivante :
         décalage du contenu de l'ensemble du premier registre et réalisation, dans un circuit de multiplication, de la multiplication du contenu du premier registre par le contenu du cinquième registre, celui-ci ayant été complété de zéros logiques si sa taille est supérieure à L; décalage du contenu du deuxième registre et addition de ce contenu avec le résultat de la multiplication, codé sur Q ∗ L + L bits, dans un deuxième additionneur;
         stockage, dans le deuxième registre, des [Q - j] ∗ L bits de poids fort de la donnée binaire produite par le deuxième additionneur, et stockage des L bits de poids les plus faibles de ces [Q - j] ∗ L bits dans le quatrième registre.
      Selon un mode de réalisation, l'étape 2.2 est la suivante :
         lors des Q - 1 premières itérations :
         décalage du contenu de l'ensemble du premier registre et réalisation, dans un circuit de multiplication, de la multiplication du contenu du premier registre par le contenu du cinquième registre, celui-ci ayant été complété de zéros logiques si sa taille est supérieure à L; décalage du contenu du deuxième registre et addition de ce contenu avec le résultat de la multiplication, codé sur Q ∗ L + L bits, dans un deuxième additionneur:
         stockage, dans le deuxième registre, des [Q - j] ∗ L bits de poids fort de la donnée binaire produite par le deuxième additionneur, et stockage des L bits de poids les plus faibles de ces [Q - j] ∗ L bits dans le quatrième registre.
      Selon un mode de réalisation, l'étape 2.1 est la suivante :
         - pour i = j = 0 :
            - décalage du contenu du troisième registre de une unité vers la droite et chargement d'un 1 sur le bit de poids fort de ce troisième registre et dans un cinquième registre; addition bit à bit du contenu du quatrième registre avec un zéro dans un premier additionneur, la sortie de ce premier additionneur étant reliée à l'entrée du quatrième registre; test du deuxième bit de poids faible à la sortie du premier additionneur, à l'aide d'un circuit de test;
            - réalisation d'une boucle de L itérations, indicée par i avec i variant de 0 à L - 1, si j est différent de 0 et de 1 à L - 1 sinon, la boucle comprenant les étapes suivantes :
            - décalage du contenu du quatrième registre de une unité vers la droite, cette opération correspondant à une division par deux du contenu de ce registre, en oubliant le reste.
            - test du bit issu de ce décalage dans le circuit de test:
               Si le bit contrôlé est égal à 1 décalage à droite du contenu du troisième registre de une unité vers la droite; chargement d'un 0 sur le bit de poids fort du troisième registre et dans le cinquième registre; addition bit à bit du contenu du quatrième registre avec un zéro dans le premier additionneur, la sortie du premier additionneur étant reliée à l'entrée du quatrième registre, et test du deuxième bit de poids faible en sortie du premier additionneur;
               Sinon : décalage à droite du contenu du troisième registre de une unité vers la droite; chargement d'un 1 sur le bit de poids fort du troisième registre et dans le cinquième registre; addition bit à bit du contenu du quatrième registre et des L derniers bits du premier registre, dans le premier additionneur, la sortie du premier additionneur étant reliée à l'entrée du quatrième registre, le premier registre formant un registre de L bits dont l'entrée et la sortie sont reliées, et test du deuxième bit de poids faible en sortie du premier additionneur.

D'autres avantages et particularités apparaîtront à la lecture de la description qui suit d'un exemple de réalisation de l'invention, à lire conjointement aux dessins - annexés dans lesquels :
- la figure 1 représente un circuit de cryptage dans lequel intervient le paramètre de calcul J0,
- la figure 2 représente schématiquement un circuit permettant de mettre en oeuvre des opérations modulaires selon la méthode de Montgomery,
- la figure 3 représente un circuit mis en oeuvre dans la production du paramètre de calcul J0, selon l'état de la technique,
- la figure 4 représente le circuit de la figure 2, modifié pour mettre en oeuvre l'invention.
- La figure 5 représente un registre à décalage utilisé dans l'invention.

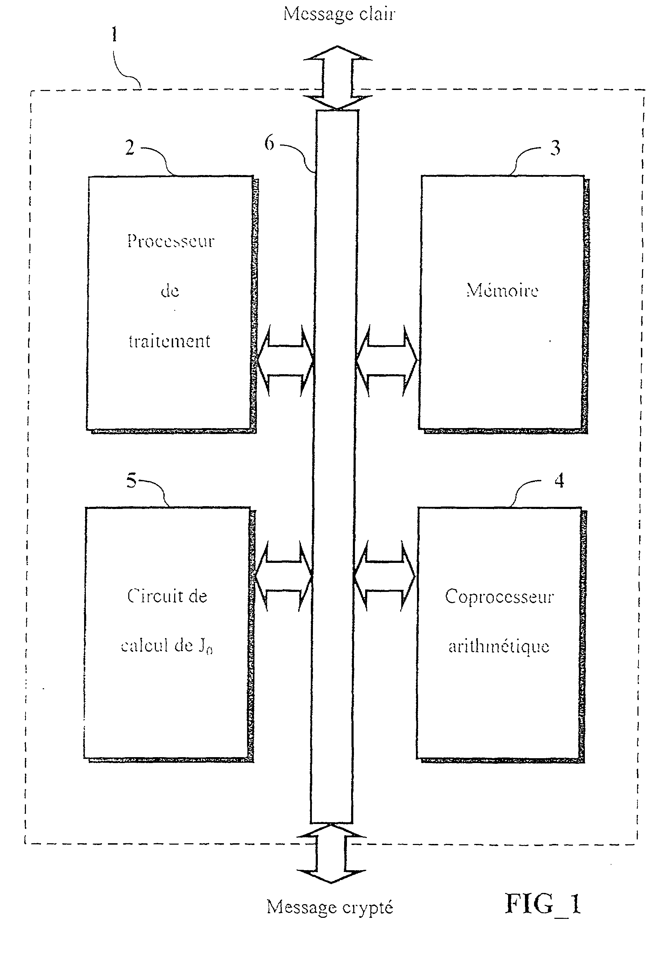

La figure 1 représente un circuit de cryptage dans lequel intervient le paramètre de calcul J0. Ladite figure 1 correspond à la figure 1 de la demande de brevet EP-A-0 778 518.

La figure 1 représente un circuit de cryptage 1 qui comporte un processeur de traitement 2, par exemple un microprocesseur 8, 16 ou 32 bits, une mémoire 3, un coprocesseur 4. un circuit dédié au calcul de J0 5 et un bus de communication 6. Le bus de communication 6 relie entre eux le processeur 2, la mémoire 3, le coprocesseur 4 et le circuit de calcul de J0. Ce bus de communication 6 sert également à recevoir un message clair ou crypté qui après traitement va ressortir, après un certain temps de traitement, par ce même bus de communication 6 après avoir été crypté ou décrypté. Un tel circuit de cryptage 1 permet plusieurs possibilités de traitement. Le bus de communication 6 englobe tous les signaux qui s'échangent à l'intérieur du circuit de cryptage 1.

Une première possibilité de traitement est purement logicielle. Le processeur de traitement 2 va effectuer tous les calculs du cryptage ou du décryptage à l'aide d'un programme stocké dans la mémoire 3. Un tel traitement ne nécessite pas la présence du coprocesseur 4 et du circuit de calcul de J0 5 mais prend un temps de traitement considérable.

Une deuxième possibilité de traitement consiste à faire traiter tous les calculs par le coprocesseur 4, le processeur 2 ne sert qu'à contrôler le bon déroulement des opérations. Cette possibilité est très rapide mais limite le cryptage à des opérations utilisant des données compatibles avec le coprocesseur 4 et de ce fait empêche de faire certains calculs. L'utilisation d'un circuit de calcul de J0 5 permet d'optimiser le calcul spécifique du paramètre J0.

Une troisième possibilité de traitement consiste à une utilisation mixte du processeur 2, du coprocesseur 4 et du circuit de calcul de J0. Cela permet de pouvoir traiter tous les types de cryptage avec une durée inférieure à la première possibilité purement logicielle.

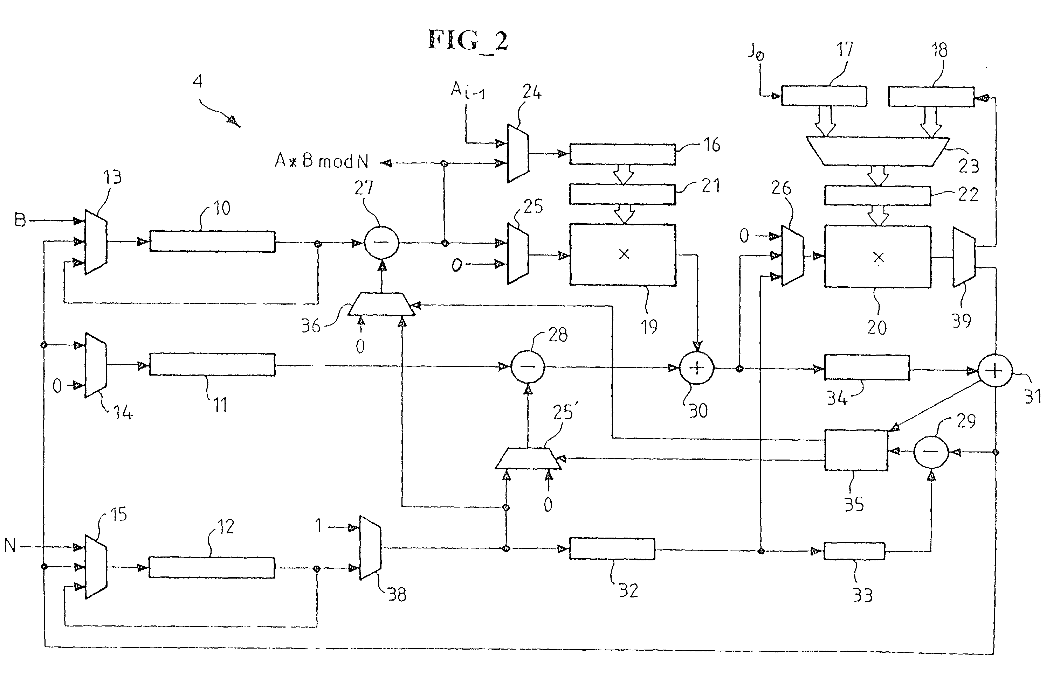

La figure 2 représente schématiquement un circuit permettant de mettre en oeuvre des opérations modulaires selon la méthode de Montgomery. Ladite figure 2 correspond à la figure 2 de la demande de brevet EP-A-0 778 518.

La figure 2 représente le coprocesseur 4 d'arithmétique modulaire.

Il comprend :
- trois registres à décalage 10, il et 12 à entrée et sortie série. Ces registres comportent chacun un même nombre n de cellules, avec n = m ∗ Bt. Ces registres pourront être subdivisables, par exemple en registres de n/2 cellules, et en registres de Bt bits.
- des multiplexeurs 13, 14 et 15 sont placés respectivement devant les registres 10, 11 et 12. On placera également des multiplexeurs devant les subdivisions si celles ci existent.
- trois registres 16, 17 et 18 comportant chacun Bt cellules. Les registres 16 et 17 et 18 sont des registres à sortie parallèle et entrée série.
- deux circuits de multiplication 19 et 20 comprenant chacun une entrée série. une entrée parallèle et une sortie série. L'entrée parallèle du circuit de multiplication 19 est reliée à la sortie du registre 16 par le biais d'une bascule de mémorisation 21 de Bt cellules. L'entrée parallèle du circuit de multiplication 20 est reliée à l'une des sorties des registres 17 ou 18, par le biais d'une bascule de mémorisation 22 de Bt cellules. Cette bascule 22 est elle-même reliée à l'une des sorties des registres 17 et 18. par le biais d'un multiplexeur 23 à deux entrées parallèles et une sortie parallèle.
- des multiplexeurs 24, 25, 25', 26, 36 et 38.
- un démultiplexeur 39.
- des circuits de soustraction série 27, 28 et 29.
- des circuits d'addition série 30 et 31.
- des circuits de retardement 32, 33 et 34 pour retarder de Bt temps de cycle la propagation de données binaires.
- un circuit 35 de stockage de résultat de comparaison.

Pour plus de détails, on pourra se reporter à la demande de brevet EP-A- 0 601 907, et en particulier aux passages page 15 lignes 29 à 53 et page 17 ligne 51 à page 18 ligne 54 pour avoir plus de détail sur la description du circuit.

Dans un tel circuit, lorsque l'on désire effectuer une opération P_{field} (A, B)_{N}. on procédera par exemple comme indiqué dans la demande EP-A- 0 601 907, page 19 lignes 1 à 49. En résumé, on effectuera les étapes suivantes:
- E1: on charge les données de départ qui sont A0, représentant les Bt bits de poids faible de A, dans le registre 16, B dans le registre 10. N dans le registre 12, J0 qui a été calculé par un processeur de traitement 2 externe au coprocesseur 4, dans le registre 17,
- E2: Calcul de la première itération où X, Y, et Z sont des données en transit dans le coprocesseur 4, et où S est chargé dans le registre 11:
   B1: calcul de X = B ∗ A0,
   B2: calcul de Y = (X ∗ J0) mod 2^{Bt}, où l'opération mod 2^{Bt} ne correspond qu'à une troncature,
   B3: calcul de Z = X + (Y ∗ N),
   B4: calcul de S = Z \ 2^{Bt}, où le symbole \ représente une division entière,
   B5: si S est supérieur à N alors on soustrait N à S,
- E3: Calcul des itérations suivantes ou i varie de 1 à m-1:
   B1: chargement de Ai à la place de A0,
   B2: calcul de X = S + (B ∗ Ai),
   B3: calcul de Y = (X ∗ J0) mod 2^{Bt}, où l'opération mod 2^{Bt} ne correspond qu'à une troncature,
   B4: calcul de Z = X + (Y ∗ N),
   B5: calcul de S(i) = Z \ 2^{Bt}, où le symbole \ représente une division entière,
   B6: si S(i) est supérieur à N alors on soustrait N à S(i).
- E4: A la dernière itération, S est chargé dans le registre 10.

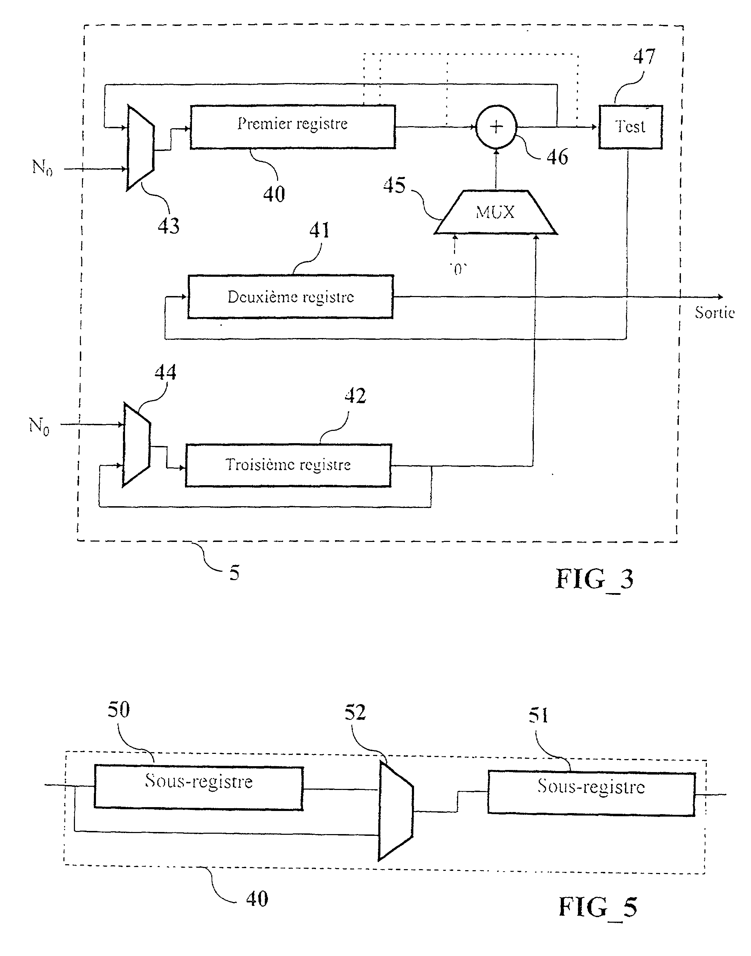

Tel qu'il est indiqué dans la demande EP-A-0 778 518, le paramètre J0 était habituellement calculé de manière logiciel et externe au coprocesseur illustré sur la figure 2. Afin de diminuer le temps de calcul de ce paramètre, la demande EP-A-0 778 518 propose d'utiliser le circuit 5 de la figure 3. Ladite figure 3 correspond à la figure 3 de la demande de brevet EP-A-0 778 518.

Le circuit de la figure 3 comporte entre autre : un premier, un deuxième et un troisième registre à décalage 40, 41 et 42 de Bt bits ayant chacun une entrée série et une sortie série, trois multiplexeurs 43, 44 et 45 ayant chacun une première et une deuxième entrée et une sortie, un additionneur 46 ayant une première et une deuxième entrée série et une sortie série et un circuit de test 47 ayant une entrée et une sortie.

Ces différents éléments sont reliés entre eux comme suit: le premier registre 40 a son entrée reliée à la sortie du multiplexeur 43, le premier registre 40 a sa sortie reliée à la première entrée de l'additionneur 46, le deuxième registre 41 a son entrée reliée à la sortie du circuit de test 47, le deuxième registre a sa sortie reliée à une borne de sortie, le troisième registre a son entrée reliée à la sortie du multiplexeur 44, le troisième registre a sa sortie reliée d'une part à la première entrée du multiplexeur 44 et d'autre part à la première entrée du multiplexeur 45. le multiplexeur 43 a sa première entrée reliée d'une part à la sortie de l'additionneur 46 et d'autre part à l'entrée du circuit de test 47, le multiplexeur 43 a sa deuxième entrée reliée à une première borne d'entrée, le multiplexeur 44 a sa deuxième entrée reliée à une deuxième borne d'entrée, le multiplexeur 45 a sa deuxième entrée reliée à un zéro logique (en général 0V).

Les signaux de commande des multiplexeurs et des registres ne sont pas représenté afin de clarifier le schéma de la figure 3. Les différents signaux de commande sont générés par une machine d'état facilement réalisable par l'homme du métier, après avoir lu le déroulement de l'un des procédés de production du paramètre J0 utilisant ce circuit.

La demande EP-A-0 778 518 décrit plusieurs procédés permettant de calculer le paramètre J0 en utilisant le circuit de la figure 3.

Les dits procédés sont basés sur l'algorithme suivant, en notant J0(i) le i-ième bit de la donnée recherchée J0 :
X, codé sur Bt bits tel que X = 0
K = X = 0
Pour i = 0 à Bt-1
   Si K mod 2 = 0, J0(i) = 1;
      Sinon J0(i) = 0;
      K = K + N0 ∗ J0(i)
      K = K/2
   X = X + N0 ∗ J0(i)

A titre d'exemple, le procédé suivant est proposé :
**Etape 1 :**
   chargement de la donnée binaire NO, codée sur Bt bits, le bit de poids faible étant égal à 1, dans les registres 40 et 42 de Bt bits, par l'intermédiaire de bornes d'entrées et des multiplexeurs 43 et 44,
**Etape 2 :**
   décalage du contenu du deuxième registre 41 de une unité vers la droite; chargement d'un 1 sur le bit de poids fort de ce registre 41; addition bit à bit du contenu du registre 40 avec un zéro dans l'additionneur série 46, la sortie de l'additionneur étant reliée à l'entrée du registre 40, et test du deuxième bit du deuxième bit de poids faible à la sortie de l'additionneur 46 à l'aide du circuit de test 47;
**Etape 3** :
   mise en oeuvre d'une boucle de calcul itérative, indicée par i. avec i variant de 1 à Bt - 1, chaque itération de la boucle comprenant les étapes suivantes :
   1 - décalage du contenu du registre 40 de une unité vers la droite, cette opération correspondant à une division par deux du contenu de ce registre, en oubliant le reste;
   2 - suivant le résultat du dernier test effectué :
      Si le bit contrôlé est égal à 1 : décalage à droite du contenu du registre 41 de une unité vers la droite; chargement d'un 0, avec le circuit de test, sur le bit de poids fort du registre 41; addition bit à bit du contenu du registre 40 avec un 0 dans l'additionneur 46, la sortie de l'additionneur 46 étant reliée à l'entrée du registre 40, et test du deuxième bit de poids faible en sortie de l'additionneur 46;
      Sinon :
         - décalage à droite du contenu du registre 41 de une unité vers la droite: chargement d'un 1, avec le circuit de test, sur le bit de poids fort du registre 41; addition bit à bit du contenu des registres 40 et 42 dans l'additionneur 46, la sortie de l'additionneur 46 étant reliée à l'entrée du registre 40. la sortie du registre 42 étant bouclée sur son entrée, et test du deuxième bit de poids faible en sortie de l'additionneur 46.

Une fois la boucle terminée, le paramètre J0 est disponible dans le registre 42.

Au total, tel que mentionné à la colonne 9 - ligne 7 de la demande EP-A-0 778 518, le procédé décrit utilise Bt² + 3 ∗ Bt - 1 cycles d'horloge. Il est susceptible de diverses variantes, décrites dans ladite demande, le temps de calcul nécessaire pour ces variantes étant donné par une formule générale du type x1 ∗ Bt² + y1 ∗ Bt - z1, avec x1, y1 et z1 des entiers et, en pratique, x1 = 1.

En utilisant des registres de taille yariable (voir par exemple colonne 13 ligne 29 à colonne 14 ligne 2 de la demande EP-A-0 778 518), on peut diminuer le nombre de cycles nécessaires et obtenir un temps de calcul de formule générale Bt²/2 + y2 ∗ Bt - z2, avec y2 et z2 des nombres positifs.

L'inventeur a cherché à améliorer les procédés décrits dans la demande EP-A-0 778 518, de sorte à réduire le temps de calcul du paramètre J0. Pour ce faire, il propose d'opérer différemment, en calculant des sous - ensembles de bits de J0. On supprime ainsi la recherche des Bt bits de J0 en opérant Bt additions bit à bit de données de Bt bits, ce qui induit un temps de calcul proportionnel à Bt² dans les procédés de l'état de la technique.

On suppose que la donnée NO et le résultat J0 sont subdivisées en un nombre entier Q de données binaires N0_{Q-1} ... N0₀ et J0_{Q-1} ... J0₀ codées sur L bits, avec L entier tel que L < Bt.

Un algorithme proposé par l'inventeur pour calculer J0 = J0_{Q-1} ... J0₀ est le suivant, en notant J0ⱼ(i) le i-ième bit de la donnée de L bits J0ⱼ :
X, donnée binaire codée sur L ∗ P bits, avec X = X_{Q-1} ... X₀ = 0
K, donnée binaire codée sur L bits, avec K = X₀ = X mod 2^{L} = 0
Pour j = 0 à Q-1,
   Pour i = 0 à L-1
      Si K mod 2 = 0, J0ⱼ(i) = 1;
      Sinon J0ⱼ(i) = 0;
      K = K + N0₀ ∗ J0ⱼ(i)
      K = K/2
   X = X + N0 ∗ J0ⱼ
   X = (X/2^{L}) mod 2LQ

Pour mettre en oeuvre ledit algorithme, l'inventeur propose de procéder de la manière suivante :
- on réalise les boucles de calcul des bits des données binaires J0ⱼ selon l'un des procédés décrits dans la demande EP-A-0 778 518, le procédé utilisé étant adapté pour produire des sous - opérandes de L bits au lieu d'opérandes de Bt bits. et
- on utilise des ressources du coprocesseur pour actualiser, par multiplication, la valeur de la donnée binaire X.

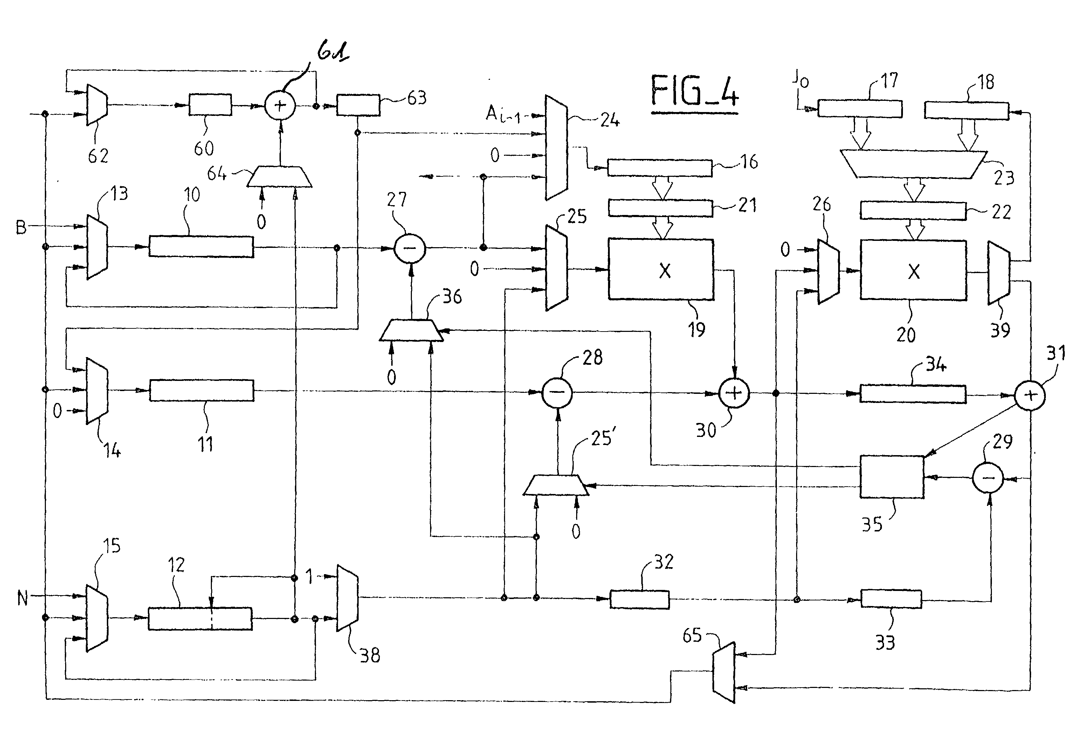

La figure 4 illustre le coprocesseur de la figure 2, ledit processeur étant adapté pour mettre en oeuvre l'algorithme défini ci-dessus. Cette adaptation comprend l'ajout d'éléments permettant de former un circuit du type de celui illustré sur la figure 3. Elle comprendra également une modification de son programme de séquencement. celui-ci n'étant pas décrit en détails et ne devant pas poser de problème à l'homme du métier disposant de la description des procédés à mettre en oeuvre.

Le circuit de la figure 4 comprend, outre les différents éléments décrits sur la figure 2 :
- un registre à décalage 60 de L bits, comprenant une entrée et une sortie.
- un additionneur série 61, comprenant deux entrées et une sortie série.
- un multiplexeur 62 comprenant deux entrées et une sortie,
- un circuit de test 63, comprenant une entrée et une sortie,
- un multiplexeur 64 comprenant deux entrées et une sortie,
- un multiplexeur 65 comprenant deux entrées et une sortie

Par ailleurs, les éléments suivants ont été modifiés :
- le multiplexeur 14 comprend une troisième entrée,
- le multiplexeur 25 comprend une troisième entrée, et
- le multiplexeur 24 comprend une troisième et une quatrième entrées.

L'entrée et la sortie du registre 60 sont reliées, respectivement, à la sortie du multiplexeur 62 et à une entrée de l'additionneur 61. L'autre entrée de l'additionneur 61 est reliée à la sortie du multiplexeur 64.

Une des entrées du multiplexeur 64 est reliée à la sortie du registre 12. Son autre entrée reçoit un zéro logique.

La sortie de l'additionneur 61 est reliée à une première entrée du multiplexeur 62 et à l'entrée du circuit de test 63. La sortie de ce circuit de test 63 est reliée, d'une part, à la troisième entrée du multiplexeur 24 et, d'autre part, à la troisième entrée du multiplexeur 14. La quatrième entrée du multiplexeur 24 reçoit un zéro logique.

La deuxième entrée du multiplexeur 62 est reliée à la sortie du multiplexeur 65, cette sortie remplaçant la sortie de l'additionneur 31 vis-à-vis des registres 10, 11 et 12. Les entrées du multiplexeur 65 sont reliées, respectivement, aux sorties des additionneurs 30 et 31.

La sortie du multiplexeur 38 est reliée à la troisième entrée du multiplexeur 25.

On suppose par ailleurs que le registre 12 comprend des moyens pour former un registre circulaire de L bits. Ces moyens, non représentés, seront par exemple formés d'un multiplexeur permettant de relier sa sortie à l'entrée de la L-ième cellule, en numérotant les cellules à partir de la sortie.

On supposera que les registres 10, 11 et 12 sont formés de Q ∗ L bits. Si ces registres ont une taille supérieure à celle de NO et J0, on pourra les ramener à la taille souhaitée, par exemple, à l'aide du registre de la figure 5.

Pour mettre en oeuvre l'algorithme décrit, les registres 10, 11, 12 et 60 permettent de stocker, respectivement, les données binaires X, J0, N0 et K.

L'inventeur propose le procédé suivant :
**Etape 1 :**
   chargement de la donnée binaire N0, codée sur Q ∗ L bits, dans le registre 12, le bit de poids faible de N0 étant à 1, chargement de Q ∗ L zéros logiques dans les registre 10 et 11, et de L zéros logiques dans le registre 60.
**Etape 2** : réalisation d'une boucle de Q itérations comprenant les étapes suivantes, indicée par j, avec j variant de 0 à Q - 1 :
   **Etape 2.1 :** réalisation d'une boucle de L itérations, indicée par i avec i variant de 0 à L - 1, comprenant les étapes suivantes :
      - décalage du contenu du registre 60 de une unité vers la droite, cette opération correspondant à une division par deux du contenu de ce registre, en oubliant le reste.
      - test du bit issu de ce décalage dans le circuit de test 63 :
         Si le bit contrôlé est égal à 1 :
            - décalage à droite du contenu du registre 11 de une unité vers la droite,
            - chargement d'un 0, avec le circuit de test 63, sur le bit de poids fort du registre 11 et dans le registre 16.
            - addition bit à bit du contenu du registre 60 avec un zéro dans l'additionneur 61, la sortie de l'additionneur 61 étant reliée à l'entrée du registre 60, et test du deuxième bit de poids faible en sortie de l'additionneur 61.
         Sinon :
            - décalage à droite du contenu du registre 11 de une unité vers la droite:
            - chargement d'un 1, avec le circuit de test, sur le bit de poids fort du registre 11 et dans le registre 16,
            - addition bit à bit du contenu du registre 60 et des L derniers bits du registre 12, dans l'additionneur 61, la sortie de l'additionneur 61 étant reliée à l'entrée du registre 60, le registre 12 formant un registre de L bits dont l'entrée et la sortie sont reliées, et test du deuxième bit de poids faible en sortie de l'additionneur 61,
   **Etape 2.2** :
      - décalage du contenu de l'ensemble du registre 12 et réalisation, dans le circuit de multiplication 19, de la multiplication du contenu du registre 12 par le contenu du registre 16. celui-ci ayant été complété de zéros logiques si sa taille est supérieure à L,
      - décalage du contenu du registre 10 et addition de ce contenu avec le résultat de la multiplication, codé sur (Q ∗ L + P) bits, dans l'additionneur 30,
      - stockage, dans le registre 10, des Q ∗ L bits de poids fort de la donnée binaire produite par l'additionneur 30, et stockage des L bits de poids les plus faibles de ces Q ∗ L bits dans le registre 60.

A la fin de ce procédé, la donnée recherchée est dans le registre 11.

La réalisation du chargement initial des registres, des calculs des données J0ⱼ et des multiplications nécessite (Q ∗ L) + Q ∗ (x ∗ L² + y ∗ P - z) + Q ∗ L ∗ (Q + 1) temps de cycle, c'est-à-dire Q ∗ [L + L ∗ (Q + 1) + (x ∗ L² + y ∗ P - z)] temps de cycle, en supposant que le registre 16 a une taille L (dans ce cas, il n'est pas nécessaire de rajouter, sur le multiplexeur 24, une entrée recevant un zéro).

Avec N0 et J0 codés sur Q ∗ L = 128 bits, x = 1, y = 3 et z = 1, le procédé de l'état de l'art nécessite 16 767 temps de cycle (en considérant la formule Bt² + 3 ∗ Bt - 1).

Avec L = 8 et Q = 16, le procédé ci-dessus ne nécessite que 3 584 temps de cycle, c'est-à-dire qu'on a une très importante réduction du temps de calcul.

On remarquera que l'on peut améliorer ledit procédé en remarquant que :
- le bit J0₀(0) est nécessairement égal à 1, et
- la Q-ième multiplication n'est pas nécessaire, le registre 11 ayant reçu les L bits de poids fort de la donnée J0 du circuit de test 63 lors de l'étape 2.1 de la Q-ième itération.

Pour minimiser le temps de calcul, on peut ainsi modifier les étapes du procédé de la manière suivante
- pour ce qui concerne l'étape 2.1
   **Etape 2.1 :**
- pour i = j = 0 :
   - décalage du contenu du registre 11 de une unité vers la droite et chargement d'un 1 sur le bit de poids fort de ce registre et dans le registre 16 (on pourra par exemple rajouter une entrée sur le multiplexeur 24, cette entrée recevant un 1 logique),
   - addition bit à bit du contenu du registre 60 avec un zéro dans l'additionneur 61 la sortie de cet additionneur étant reliée à l'entrée du registre 60,
   - test du deuxième bit de poids faible à la sortie de l'additionneur 61, à l'aide du circuit de test 63,
- réalisation d'une boucle de L itérations, indicée par i avec i variant de 0 à L - 1, si j est différent de 0 et de 1 à L - 1 sinon, la boucle comprenant les étapes suivantes :
   - décalage du contenu du registre 60 de une unité vers la droite, cette opération correspondant à une division par deux du contenu de ce registre, en oubliant le reste.
   - test du bit issu de ce décalage :
      Si le bit contrôlé est égal à 1 :
         - décalage à droite du contenu du registre 11 de une unité vers la droite;
         - chargement d'un 0, avec le circuit de test 63, sur le bit de poids fort du registre 11 et dans le registre 16,
         - addition bit à bit du contenu du registre 60 avec un zéro dans l'additionneur 61, la sortie de l'additionneur 61 étant reliée à l'entrée du registre 60, et test du deuxième bit de poids faible en sortie de l'additionneur 61,
      Sinon :
         - décalage à droite du contenu du registre 11 de une unité vers la droite;
         - chargement d'un 1, avec le circuit de test, sur le bit de poids fort du registre 11 et dans le registre 16,
         - addition bit à bit du contenu du registre 60 et des L derniers bits du registre 12, dans l'additionneur 61, la sortie de l'additionneur 61 étant reliée à l'entrée du registre 60, le registre 12 formant un registre de L bits dont l'entrée et la sortie sont reliées, et test du deuxième bit de poids faible en sortie de l'additionneur 61.
   - pour ce qui concerne l'étape 2.2 :
      **Etape 2.2 :**
      lors des Q - 1 premières itérations :
      - décalage du contenu de l'ensemble du registre 12 et réalisation, dans le circuit de multiplication 19, de la multiplication du contenu du registre 12 par le contenu du registre 16, celui-ci ayant été complété de zéros logiques si sa taille est supérieure à L,
      - décalage du contenu du registre 10 et addition de ce contenu avec le résultat de la multiplication, codé sur (Q ∗ L + P) bits, dans l'additionneur 30,
      - stockage, dans le registre 10, des Q ∗ L bits de poids fort de la donnée binaire produite par l'additionneur 30, et stockage des L bits de poids les plus faibles de ces Q ∗ L bits dans le registre 60.

Selon une variante, un algorithme proposé par l'inventeur pour calculer J0 =
J0_{Q-1} ... J0₀ est le suivant :
   X = 0
   K = X₀ = X mod 2^{L} = 0
   Pour j = 0 à Q-1,
      Pour i = 0 à L-1
         Si K mod 2 = 0, J0ⱼ (i) = 1;
         Sinon J0ⱼ(i) = 0;
         K = K + N0₀ ∗ J0ⱼ(i)
         K = K/2
      X = X + N0 ∗ J0ⱼ
      X = (X/2^{L}) mod 2^{L(Q-j)}

Pour mettre en oeuvre cet algorithme, il suffira d'utiliser un registre 10 de taille variable pour stocker X, et ne stocker que les L ∗ (Q - j) bits de poids fort de la donnée produite par le circuit de multiplication 19. Un exemple d'un tel registre est décrit figure 5. La figure 5 montre un registre 40, qui pourrait aussi être l'un des registres 10, 11, 22, 41 ou 42, et qui est décomposé en deux sous-registres à décalage 50 et 51 respectivement de Bt-L et de L bits ayant chacun une entrée et une sortie série, un multiplexeur 52 ayant une première entrée reliée à la sortie du registre 50. une deuxième entrée reliée à l'entrée du registre 50 et une sortie reliée à l'entrée du registre 51. Un tel dispositif se comporte comme un registre à décalage 40 ayant son entrée confondue avec l'entrée du registre 50 et sa sortie confondue avec la sortie du registre 51. Cependant suivant la commande du multiplexeur, le registre à décalage 40 aura une taille variant de L ou de Bt bits. L'homme de l'art n'aura aucun mal à imaginer un registre découpé en trois, quatre ou plus de sous-registres permettant d'obtenir des registres ayant des configurations plus nombreuses.

Dans ce cas, on pourra montrer que le temps de calcul est donné par la formule suivante : Q ∗ [L + L ∗ (Q + 4)/2 + (x ∗ L² + y ∗ L + z)], ce qui réduit le nombre de temps de cycle nécessaires à 2800.

Pour implémenter l'algorithme ci-dessus, il suffit de modifier l'étape 2.2 telle que définie dans le premier procédé :
**Etape 2.2** :
- décalage du contenu de l'ensemble du registre 12 et réalisation, dans le circuit de multiplication 19, de la multiplication du contenu du registre 12 par le contenu du registre 16,
- décalage du contenu du registre 10 et addition de ce contenu avec le résultat de la multiplication, codé sur (Q ∗ L + P) bits, dans l'additionneur 30,
- stockage, dans le registre 10, des (Q - j) ∗ L bits de poids fort de la donnée binaire produite par l'additionneur 30, et stockage des L bits de poids les plus faibles de ces Q ∗ L bits dans le registre 60.

On pourra, de même que dans le premier procédé illustré, diminuer le temps de calcul en modifiant les étapes 2.1 et 2.2 pour tenir compte du fait que J0₀(0) = 1 et que la dernière multiplication n'est pas nécessaire.

Bien entendu, on pourra, sans sortir du cadre de l'invention, utiliser un coprocesseur modifié différemment que dans l'exemple illustré sur la figure 4. Ainsi. on pourra choisir d'utiliser des registres dédiés pour stocker les données X, J0 et N0. On pourra également utiliser le circuit de multiplication 20 et le circuit d'addition 31 pour le calcul de X. Il suffira d'adapter les moyens de multiplexage et d'ajouter les connexions nécessaires pour relier entre eux les éléments intervenant dans les calculs, ces adaptations ne posant pas de problème à l'homme du métier.

## Revendications

1. Procédé de production dans un circuit intégré d'un paramètre J0 associé à la mise en oeuvre d'opérations modulaires selon la méthode de Montgomery, avec J0 codé sur Q ∗ L bits tels que J0 = J0_{L-1} ... J0₀ , avec Q et L des nombres entier.
caractérisé en ce qu'il comprend les étapes suivantes :
**Etape 1 :** chargement d'une donnée binaire N0, codée sur Q ∗ L bits, le bit de poids faible de N0 étant égal à 1, dans un premier registre (12), chargement de Q ∗ L zéros dans des deuxième et troisième registre (10, 11) et de L zéros dans un quatrième registre (60);
**Etape 2 :** réalisation d'une boucle de Q itérations comprenant les étapes suivantes, indicée par j, avec j variant de 0 à Q - 1 :
**Etape 2.1 :** réalisation d'une boucle de L itérations, indicée par i avec i variant de 0 à L - 1, comprenant les étapes suivantes :
- décalage du contenu du quatrième registre (60) de une unité vers la droite, cette opération correspondant à une division par deux du contenu de ce registre, en oubliant le reste.
- test du bit issu de ce décalage dans un circuit de test (63) :
Si le bit contrôlé est à 1 : décalage à droite du contenu du troisième registre (11) de une unité vers la droite et chargement d'un 0 sur le bit de poids fort de ce registre (11) et dans un cinquième registre (16): addition bit à bit du contenu du quatrième registre (60) avec un zéro dans un premier additionneur (61), une sortie de ce premier additionneur étant reliée à l'entrée du quatrième registre (60). et test du deuxième bit de poids faible en sortie du premier additionneur;
Sinon : décalage à droite du contenu du troisième registre (11) de une unité vers la droite; chargement d'un I sur le bit de poids fort du troisième registre et dans le cinquième registre (16); addition bit à bit du contenu du quatrième registre (60) et des L derniers bits du premier registre (12), dans le premier additionneur (61), la sortie de ce premier additionneur étant reliée à l'entrée du quatrième registre (60), le premier registre (12) formant un registre de L bits dont l'entrée et la sortie sont reliées, et test du deuxième bit de poids faible en sortie du premier additionneur;
**Etape 2.2 :**
décalage du contenu de l'ensemble du premier registre (12) et réalisation, dans un circuit de multiplication (19), de la multiplication du contenu du premier registre (12) par le contenu du cinquième registre (16), celui-ci ayant été complété de zéros logiques si sa taille est supérieure à L: décalage du contenu du deuxième registre (10) et addition de ce contenu avec le résultat de la multiplication, codé sur Q ∗ L + L bits, dans un deuxième additionneur (30); stockage, dans le deuxième registre (10), des Q ∗ L bits de poids fort de la donnée binaire produite par le deuxième additionneur (31), et stockage des L bits de poids les plus faibles de ces Q ∗ L bits dans le quatrième registre (60).

2. Procédé selon la revendication 1. caractérisé en ce que l'étape 2.2 est la suivante :
lors des Q - 1 premières itérations :
décalage du contenu de l'ensemble du premier registre (12) et réalisation, dans un circuit de multiplication (19), de la multiplication du contenu du premier registre (12) par le contenu du cinquième registre (16), celui-ci ayant été complété de zéros logiques si sa taille est supérieure à L;
décalage du contenu du deuxième registre (10) et addition de ce contenu avec le résultat de la multiplication, codé sur Q ∗ L + L bits, dans un deuxième additionneur (30); stockage, dans le deuxième registre (10), des Q ∗ L bits de poids fort de la donnée binaire produite par le deuxième additionneur (31), et stockage des L bits de poids les plus faibles de ces Q ∗ L bits dans le quatrième registre (60).

3. Procédé selon la revendication 1, caractérisé en ce que l'étape 2.2 est la suivante :
décalage du contenu de l'ensemble du premier registre (12) et réalisation. dans un circuit de multiplication (19), de la multiplication du contenu du premier registre (12) par le contenu du cinquième registre (16), celui-ci ayant été complété de zéros logiques si sa taille est supérieure à L;
décalage du contenu du deuxième registre (10) et addition de ce contenu avec le résultat de la multiplication, codé sur Q ∗ L + L bits, dans un deuxième additionneur (30); stockage, dans le deuxième registre (10), des [Q - j] ∗ L bits de poids fort de la donnée binaire produite par le deuxième additionneur (31), et stockage des L bits de poids les plus faibles de ces [Q - j] ∗ L bits dans le quatrième registre (60).

4. Procédé selon la revendication 3, caractérisé en ce que l'étape 2.2 est la suivante :
lors des Q - 1 premières itérations :
décalage du contenu de l'ensemble du premier registre (12) et réalisation. dans un circuit de multiplication (19), de la multiplication du contenu du premier registre (12) par le contenu du cinquième registre (16), celui-ci ayant été complété de zéros logiques si sa taille est supérieure à L;
décalage du contenu du deuxième registre (10) et addition de ce contenu avec le résultat de la multiplication, codé sur Q ∗ L + L bits, dans un deuxième additionneur (30); stockage, dans le deuxième registre (10), des [Q - j] ∗ L bits de poids fort de la donnée binaire produite par le deuxième additionneur (31), et stockage des L bits de poids les plus faibles de ces [Q - j] ∗ L bits dans le quatrième registre (60).

5. Procédé selon l'une des revendications 1 à 4, caractérisé en ce que l'étape 2.1 est la suivante :
- pour i = j = 0 :
- décalage du contenu du troisième registre (11) de une unité vers la droite et chargement d'un 1 sur le bit de poids fort de ce troisième registre et dans un cinquième registre (16); addition bit à bit du contenu du quatrième registre (60) avec un zéro dans un premier additionneur (61), la sortie de ce premier additionneur étant reliée à l'entrée du quatrième registre; test du deuxième bit de poids faible à la sortie du premier additionneur, à l'aide d'un circuit de test (63);
- réalisation d'une boucle de L itérations, indicée par i avec i variant de 0 à L - 1, si j est différent de 0 et de 1 à L - 1 sinon, la boucle comprenant les étapes suivantes :
- décalage du contenu du quatrième registre (60) de une unité vers la droite, cette opération correspondant à une division par deux du contenu de ce registre, en oubliant le reste.
- test du bit issu de ce décalage dans le circuit de test (63):
Si le bit contrôlé est égal à 1 : décalage à droite du contenu du troisième registre (11) de une unité vers la droite; chargement d'un 0 sur le bit de poids fort du troisième registre et dans le cinquième registre (16); addition bit à bit du contenu du quatrième registre (60) avec un zéro dans le premier additionneur (61), la sortie du premier additionneur étant reliée à l'entrée du quatrième registre, et test du deuxième bit de poids faible en sortie du premier additionneur;
Sinon : décalage à droite du contenu du troisième registre (11) de une unité vers la droite; chargement d'un 1 sur le bit de poids fort du troisième registre et dans le cinquième registre (16); addition bit à bit du contenu du quatrième registre (60) et des L derniers bits du premier registre (12), dans le premier additionneur (61), la sortie du premier additionneur étant reliée à l'entrée du quatrième registre, le premier registre formant un registre de L bits dont l'entrée et la sortie sont reliées, et test du deuxième bit de poids faible en sortie du premier additionneur.

## Claims

1. A method for producing in an integrated circuit a parameter J0 associated with the performance of modular operations by the Montgomery method, with J0 coded on Q∗L bits, such as J0 = J0_{L-1} .... J0₀, with Q and L being whole numbers,
characterised in that it comprises the following steps:
**Step 1 :** loading of a binary datum N0, coded on Q∗L bits, the lightweight bit of N0 being equal to 1, in a first register (12), loading of Q∗L zeros into second and third registers (10, 11), and of L zeros into a fourth register (60) ;
**Step 2** :performing a loop of Q iterations comprising the following steps indexed by j, with j varying from 0 to Q - 1:
**Step 2.1 :** performing a loop of L iterations indexed by i, with i varying from 0 to L - 1, comprising the following steps:
- shifting the contents of the fourth register (60) by unity to the right, this operation corresponding to a division by two of the contents of that register, ignoring the remainder;
- testing the bit resulting from this shift in a test circuit (63):
**if** the controlled bit is at 1: performing a right shift of the contents of the third register (11) by unity to the right and loading a 0 on the heavyweight bit of that register (11) and, in a fifth register (16): adding together, bit by bit, the contents of the fourth register (60) with a zero in a first adder (61), an output of the said first adder being connected to the input of the fourth register (60), and testing the lightweight second bit at the output of the first adder;
**if not** : performing a right shift of the contents of the third register (11) by unity to the right, loading a 1 on the heavyweight 'bit of the third register and, in the fifth register (16), adding together in the first adder (61), bit by bit, the contents of the fourth register (60) and L final bits from the first register (12), the output of the said first adder being connected to the input of the fourth register (60), the first register (12) constituting a register of L bits the input and output of which are connected, and testing the lightweight second bit at the output of the first adder;
**Step 2.2 :** shifting the contents of the whole of the first register (12), and carrying out in a multiplication circuit (19) the multiplication of the contents of the first register (12) by the contents of the fifth register (16), the latter having been furnished with logical zeros if its magnitude is greater than L, shifting the contents of the second register (10), and adding together these contents and the result of the multiplication, coded on Q∗L+L bits, in a second adder (30), storing in the second register (10) Q∗L heavyweight bits of the binary datum produced by the second adder (31), and storing the L bits of lightest weight of the said Q∗L bits in the fourth register (60).

2. A method according to Claim 1, characterised in that step 2.2 is as follows:
during Q - 1 first iterations:
shifting the contents of the whole of the first register (12), and carrying out in a multiplication circuit (19) the multiplication of the contents of the first register (12) by the contents of the fifth register (16), the latter having been furnished with logical zeros if its magnitude is greater than L, shifting the contents of the second register (10), and adding together these contents and the result of the multiplication, coded on Q∗L+L bits, in a second adder (30), storing in the second register (10) Q∗L heavyweight bits of the binary datum produced by the second adder (31), and storing the L bits of lightest weight of the said Q∗L bits in the fourth register (60).

3. A method according to Claim 1, characterised in that step 2.2 is as follows:
shifting the contents of the whole of the first register (12), and carrying out in a multiplication circuit (19) the multiplication of the contents of the first register (12) by the contents of the fifth register (16), the latter having been furnished with logical zeros if its magnitude is greater than L, shifting the contents of the second register (10), and adding together these contents and the result of the mul-tiplication, coded on [Q - j]∗L bits, in a second adder (30), storing in the second register (10) Q∗L heavyweight bits of the binary datum produced by the second adder (31), and storing the L bits of lightest weight of the said [Q - j]∗L bits in the fourth register (60).

4. A method according to Claim 3, characterised in that step 2.2 is as follows:
during Q - 1 first iterations:
shifting the contents of the whole of the first register (12), and carrying out in a multiplication circuit (19) the multiplication of the contents of the first register (12) by the contents of the fifth register (16), the latter having been furnished with logical zeros if its magnitude is greater than L, shifting the contents of the second register (10), and adding together these contents and the result of the multiplication, coded on [Q - j] ∗ L bits, in a second adder (30), storing in the second register (10) Q∗L heavyweight bits of the binary datum produced by the second adder (31) and storing the L bits of lightest weight of the said [Q - j]∗L bits in the fourth register (60).

5. A method according to one of Claims 1 to 4, characterised in that step 2.1 is as follows:
for i = j = 0:
shifting the contents of the third register (11) by unity to the right, and loading a 1 on the heavyweight bit of the said third register and into a fifth register (16); adding together, bit by bit, the contents of the fourth register (60) with a zero in a first adder (61), the output of the said first adder being connected to the input of the fourth register; testing the lightweight second bit at the output of the first adder, with the aid of a test circuit (63) ;
- performing a loop of L iterations, indexed by i with i varying from 0 to L - 1 if j is different from 0, and varying from 1 to L - 1 if not, the loop comprising the following steps:
- shifting the contents of the fourth register (60) by unity to the right, this operation corresponding to a division by two of the contents of this register, ignoring the remainder,
- testing the bit resulting from this shift in the test circuit (63):
**if** the controlled bit is equal to 1: performing a right shift of the contents of the third register (11) by unity to the right; loading a 0 on the heavyweight bit of the third register and into the fifth register (16); adding together, bit by bit, the contents of the fourth register (60) with a zero in a first adder (61), the output of the first adder being connected to the input of the fourth register, and testing the lightweight second bit at the output of the first adder;
**if not** : performing a right shift of the contents of the third register (11) by unity to the right; loading a 1 on the heavyweight bit of the third register and into the fifth register (16), adding, in the first adder (61), bit by bit the contents of the fourth register (60) and the L final bits from the first register (12), the output of the first adder being connected to the input of the fourth register, the first register constituting a register of L bits the input and output of which are connected, and testing the lightweight second bit at the output of the first adder.

## Patentansprüche

1. Verfahren zum Erzeugen eines Parameters J0 in einem integrierten Schaltkreis, der zu der Ausführung von Modulo-Operationen nach der Montgomery-Methode gehört, wobei J0 durch Q x L Bits dargestellt wird, so daß gilt J0 = J0 _{L-1} ... J0₀, wobei Q und L ganze Zahlen sind,
gekennzeichnet durch die folgenden Schritte:
Schritt 1: Laden eines binären Datenwertes N0, der durch Q x L Bits dargestellt ist, wobei das Bit mit dem niedrigen Gewicht aus N0 gleich 1 ist, in ein erstes Register (12), laden von Q x L Nullen in ein zweites und drittes Register (10, 11) und von L Nullen in ein viertes Register (60),
Schritt 2: Ausführung einer Schleife von Q Iterationen mit den folgenden Schritten, die mit j indiziert sind, wobei j eine Variable zwischen 0 und Q - 1 ist:
Schritt 2.1: Ausführung einer Schleife von L Iterationen, die durch i indiziert sind, wobei i eine Variable zwischen 0 und L - 1 ist, mit den folgenden Schritten:
Verschieben des Inhalts des vierten Registers (60) um eine Einheit nach rechts, wobei diese Operation einer Division des Inhalts dieses Registers durch zwei entspricht, wobei der Rest unbeachtet bleibt,
Prüfen des Bits, das bei dieser Verschiebung ausgegeben wurde, in einem Testschaltkreis (63):
Wenn das kontrollierte Bit 1 ist: Rechtsverschieben des Inhalts des dritten Registers (11) um eine Einheit nach rechts und Laden einer 0 in das Bit mit großem Gewicht dieses Registers (11) und in einem fünften Register (16): Bit-für-Bit-Addition des vierten Registers (60) mit Null in einem ersten Addierer (61), wobei ein Ausgang dieses ersten Addierers mit dem Eingang des vierten Registers (60) verbunden ist, und Überprüfen des zweiten Bits mit niedrigem Gewicht am Ausgang des ersten Addierers;
andernfalls: Rechtsverschieben des Inhalts des dritten Registers (11) um eine Einheit nach rechts, Laden einer 1 in das Bit mit großem Gewicht des dritten Registers und in das fünfte Register (16), Bit-für-Bit-Addition des vierten Registers (60) und der L letzten Bits des ersten Registers (12) in dem ersten Addierer (61), wobei der Ausgang dieses ersten Addierers mit dem Eingang des vierten Registers (60) verbunden ist, das erste Register (12) ein Register mit L Bits bildet, dessen Eingang und Ausgang verbunden sind, und Überprüfen des zweiten Bits mit niederem Gewichts am Ausgang des ersten Addierers;
Schritt 2.2: Verschieben des Inhalts des Ensembles des ersten Registers (12) und Durchführung der Multiplikation des Inhalts des ersten Registers (12) mit dem Inhalt des fünften Registers (16) in einem Multiplikatorschaltkreis (19), welches mit logischen Nullen aufgefüllt wird, wenn seine Größe über L hinausgeht, Verschieben des Inhalts des zweiten Registers (10) und Addieren dieses Inhalts zu dem Ergebnis der Multiplikation, dargestellt durch Q x L + L Bits, in einem zweiten Addierer (30), Abspeichern von Q x L Bits von großem Gewicht des binären Datenwertes, der durch den zweiten Addierer (31) erzeugt wurde, in dem zweiten Register (10) und Abspeichern der L Bits mit geringstem Gewicht der Q x L Bits in dem vierten Register (60).

2. Verfahren nach Anspruch 1, dadurch gekennzeichnet, daß Schritt 2.2 wie folgt ist:
bei den ersten Q - 1 Iterationen:
Verschieben des Inhalts des Ensembles des ersten Registers (12) und Ausführung der Multiplikation des Inhalts des ersten Registers (12) mit dem Inhalt des fünften Registers (16) in einen Multiplikatorschaltkreis (19), welches mit logischen Nullen aufgefüllt wurde, wenn seine Größe über L hinausgeht, Verschieben des Inhalts des zweiten Registers (10) und Addition dieses Inhalts zu dem Ergebnis der Multiplikation, dargestellt durch Q x L + L Bits, in einem zweiten Addierer (30), Abspeichern von Q x L Bits großen Gewichts des binären Datenwertes, der durch den zweiten Addierer (31) erzeugt wurde, in dem zweiten Register (10) und Abspeichern der L Bits mit geringstem Gewicht der Q x L Bits in dem vierten Register (60).

3. Verfahren nach Anspruch 1, dadurch gekennzeichnet, daß der Schritt 2.2 wie folgt ist:
Verschieben des Inhalts des Ensembles des ersten Registers (12) und Ausführung der Multiplikation des Inhalts des ersten Registers (12) mit dem Inhalt des fünften Register (16) in einem Multiplikatorschaltkreis (19), das mit logischen Nullen aufgeführt wurde, wenn seine Größe über L hinausgeht, Verschieben des Inhalts des zweiten Registers (10) und Addition dieses Inhalts zu dem Ergebnis der Multiplikation, dargestellt durch Q x L + L Bits, in einem zweiten Addierer (30), Abspeichern in dem zweiten Register (10) von [Q - j] x L Bits großen Gewichts des binären Datenwertes, der durch den zweiten Addierer (31) erzeugt wurde, und
Abspeichern der L Bits mit geringstem Gewicht der [Q - J] x L Bits in dem vierten Register (60).

4. Verfahren nach Anspruch 3, dadurch gekennzeichnet, daß der Schritt 2.2 wie folgt ist:
bei den ersten Q - 1 Iterationen:
Verschieben des Inhalts des Ensembles des ersten Registers (12) und Ausführung der Multiplikation des Inhalts des ersten Registers (12) mit dem Inhalt des fünften Register (16) in einem Multiplikatorschaltkreis (19), welches aufgefüllt wurde mit logischen Nullen, wenn seine Größe über L hinausgeht, Verschieben des Inhalts des zweiten Registers (10) und Addition dieses Inhalts zu der Multiplikation, dargestellt durch Q x L + L Bits, in einem zweiten Addierer (30), Abspeichern von [Q - J] x L Bits großen Gewichts des binären Datenwertes, der durch den zweiten Addierer (31) erzeugt wurde, in dem zweiten Register (10) und Abspeichern der L Bits geringstem Gewicht der [Q - J] x L Bits in dem vierten Register (60).

5. Verfahren nach einem der Ansprüche 1 bis 4, dadurch gekennzeichnet, daß der Schritt 2.1 wie folgt ist:
für i = j = 0:
Verschieben des Inhalts des dritten Registers (11) um eine Einheit nach rechts und Laden einer 1 in das Bit mit großem Gewicht bei diesem dritten Register und in einem fünften Register (16), Bit-für-Bit-Addition des Inhalts des vierten Registers (60) mit Null in einem ersten Addierer (61), wobei der Ausgang dieses ersten Addierers mit dem Eingang des vierten Registers verbunden ist, Überprüfen des zweiten Bits mit niedrigem Gewicht am Ausgang des ersten Registers mit Hilfe eines Testschaltkreises (63),
Durchführung einer Schleife mit L Iterationen, die durch i indiziert sind, wobei i eine Variable zwischen 0 und L - 1 ist, wenn j ungleich 0 und 1 bis L - 1, andernfalls ist, wobei die Schleife die folgenden Schritte umfaßt:
Verschieben des Inhalts des vierten Registers um eine Einheit nach rechts, wobei diese Operation einer Division des Inhalts dieses Registers durch zwei entspricht, wobei der Rest nicht weiter beachtet wird,
Überprüfen des Bits, das durch diese Verschiebung in dem Testschaltkreis (63) ausgegeben wurde:
Wenn das kontrollierte Bit gleich 1 ist: Rechtsverschieben des Inhalts des dritten Registers (11) um eine Einheit nach rechts, Laden einer 0 in das Bit mit großem Gewicht des dritten Registers und in das fünfte Register (16), Bit-für-Bit-Addition des Inhalts des vierten Registers (60) mit Null in den ersten Addierer (61), wobei der Ausgang des ersten Addierers mit dem Eingang des vierten Registers verbunden ist, und Überprüfen des zweiten Bits mit geringem Gewicht am Ausgang des ersten Addierers;
andernfalls: Rechtsverschieben des Inhalts des dritten Registers (11) um eine Einheit nach rechts, Laden einer 1 in das Bit großen Gewichts des dritten Registers und in das fünfte Register (16), Bit-für-Bit-Addition des Inhalts des vierten Registers (60) und von L letzten Bits des ersten Registers (12) in dem ersten Addierer (61), wobei der Ausgang des ersten Addierers mit dem Eingang des vierten Registers verbunden ist, das erste Register ein Register mit L Bits bildet, dessen Eingang und Ausgang verbunden sind, und Überprüfen des zweiten Bits mit niedrigem Gewicht am Ausgang des ersten Addierers.
